# EUROPÄISCHE PATENTSCHRIFT

(11) **EP 1 844 659 B1**
(45) Veröffentlichungstag und Bekanntmachung des Hinweises auf die Patenterteilung: **16.12.2009**
(21) Anmeldenummer: 07000691.1
(22) Anmeldetag: 15.01.2007
(51) Int. Cl.: A22C 11/00, A22C 15/00

(54) **Direktanbindung von Wurstclip- und Wurstfördereinrichtung**
Direct connection of sausage clip and sausage handling device
Nouage direct d'un dispositif d'agrafe de saucisson et d'alimentation de saucisson

(30) Priorität: 11.04.2006 DE 102006017017
(43) Veröffentlichungstag der Anmeldung: 17.10.2007
(73) Patentinhaber: Poly-clip System GmbH & Co. KG, 60489 Frankfurt am Main (DE)
(72) Erfinder: Gladh, Steven, 41274 Göteburg (SE)
(74) Vertreter: Eisenführ, Speiser & Partner

(56) Entgegenhaltungen:
- EP-A1- 0 048 507
- EP-A1- 0 424 675
- WO-A-92/03929
- US-A- 3 624 774
- US-B1- 6 523 462

## Beschreibung

Die Erfindung betrifft ein System aus einer Wurstclipmaschine und einer Wurstfördereinrichtung gemäß dem Oberbegriff des Anspruchs 1 sowie ein Verfahren zum Steuern eines solchen Systems gemäß dem Anspruch 6. Eine derartige Einrichtung und ein entsprechendes Verfahren wird in EP-A-48507 offenbart.

In der Praxis ist es bei der Herstellung von Wurstprodukten üblich, dass die Füllung einer zu bildenden Wurst bzw. das Wurstbrät über ein Füllrohr in ein einseitig verschlossenes, schlauch- oder beutelartiges, meist flexibles Verpackungsmaterial gefördert wird. Nach Abschluss des Füllvorgangs wird mittels zweier sog. Verdrängerscherenpaare ein füllgutfreier Zopfabschnitt gebildet. Auf diesem Zopfabschnitt werden sodann zwei Verschlussmittel in Form von Verschlussclipsen angebracht, welche das Verpackungsmaterial auf beide Seiten des Zopfabschnitts verschließen. Danach wird dieser durchtrennt. Um die so hergestellte Wurst weiterverarbeiten zu können, d.h. also das Wurstprodukt räuchern, trocknen usw. zu können, wird ferner ein Faden in der Weise zugeführt, dass er beim Setzen der Clipse eines Wurstprodukts von diesen umschlossen und somit an der Wurst befestigt wird.

Wie bereits vorstehend erwähnt, werden viele Wurstprodukte anschließend weiterverarbeitet, beispielsweise durch Räuchern in einer Rauchkammer. Hierzu müssen die Würste an ihren Fäden vereinzelt so an Rauchstöcken aufgehängt werden, dass sie sich nach Möglichkeit nicht berühren. In der Praxis werden dabei die Rauchstöcke von Hand mit Würsten bestückt.

Um dies zu ermöglichen, werden beispielsweise Kranzdarmwürste auf einem Tisch mit einer horizontal verlaufenden Tischplatte gefüllt, der sich unmittelbar an das Füllrohr einer Wurstclipmaschine anschließt. Anschließend gleiten die in einer horizontalen Ebene ausgerichteten Würste entlang einer schräg nach unten verlaufenden Rampe zu einer Sammelstelle, wo die manuelle Beschickung der Stöcke mit Würsten erfolgt.

Aus der DE 32 38 023 A1 ist weiterhin eine Vorrichtung bekannt, bei der ein Transportband vorgesehen ist, das sich an den Auslauf des Füllrohres der Wurstclipmaschine unmittelbar anschließt. Mittels des Transportbands werden die vom Füllrohr abgenommenen Würste als Wurstkette oder paarweise zusammengefasst in liegendem Zustand, d.h. in horizontaler Ausrichtung zu einer Transportschnecke gefördert. Die Transportschnecke fördert wiederum die Würste zu einem Magazin für Rauchstöcke weiter, an dem die Würste an die einzelnen Rauchstücke übergeben werden.

Bei dem zu erst geschilderten System des Standes der Technik ist es nachteilig, dass die Würste entlang einer Schräge gleiten, was die Gefahr einer Beschädigung des Verpackungsmaterials der Würste beinhaltet. Darüber hinaus müssen die Würste von Hand ergriffen und um 90° gedreht werden, um in vertikaler Ausrichtung auf die Rauchstöcke aufgeschoben werden zu können. Hierdurch besteht ein erheblicher Handhabungsaufwand.

Bei dem zuletzt erläuterten System des Standes der Technik erweist es sich demgegenüber als nachteilig, dass zwischen der Füllöffnung des Füllrohrs und dem Rauchstockmagazin zwei Fördereinrichtungen angeordnet sind, deren Aufbau und Funktionsweise ganz unterschiedlich ist. Neben den hierdurch entstehenden konstruktiven Aufwand bedarf es einer komplizierten Steuerung, um den Füllvorgang und den Abtransport der Würste bis zu dem Rauchstockmagazin zu koordinieren.

Es ist Aufgabe der Erfindung, ein System bzw. ein Verfahren der eingangs genannten Art bereitzustellen, die gegenüber dem Stand der Technik einen deutlich einfacheren und damit kostengünstigeren Aufbau erlauben. Insbesondere ist es Aufgabe der vorliegenden Erfindung, ein System bzw. ein Verfahren der eingangs genannten Art bereitzustellen, die gegenüber dem Stand der Technik das Aufhängen von einzelnen Würsten, wie beispielsweise Kranzdarmwürsten, mit eingecliptem Faden auf einfache Weise ermöglicht.

Die vorstehende Aufgabe wird hinsichtlich des Systems durch die Merkmale des Anspruchs 1 gelöst. In den sich daran anschließenden Ansprüchen 2 bis 5 finden sich vorteilhafte Ausgestaltungen hierzu.

Durch die Ausgestaltung der Wurstfördereinrichtung als ein Gliederförderer und der Anordnung dieses Gliederförderers unmittelbar benachbart des Füllrohrs der Wurstclipmaschine in der Weise, dass ein an dem Füllrohr der Wurstclipmaschine gefülltes und verschlossenes Wurstprodukt von dem wenigstens einen Förderelement des Gliederförderers erfassbar ist, wird ein einfacher Aufbau und Betrieb des Systems aus Wurstclipmaschine und Wurstfördereinrichtung bereitgestellt. Da ein Gliederförderer ermöglicht, je nach zu lösender Transportaufgabe ganz unterschiedliche Förderelemente einsetzen zu können, besteht somit die Möglichkeit, die Wurstprodukte an dem Füllrohr in einer Weise zu erfassen, dass sie sich bei der Übernahme bereits in einer vertikalen Ausrichtung befinden, was eine einfache Übergabe der Wurstprodukte beispielsweise an Rauchstöcke erlaubt. Mit anderen Worten schließt sich der Gliederförderer unmittelbar und ohne Zwischenschaltung irgendwelcher weiterer Fördererzeuge an die Wurstclipmaschine an, so dass Tische, Rampen und dgl. wegfallen können. Darüber hinaus wird nur noch eine Fördereinrichtung zum Fördern der Wurstprodukte von der Wurstclipmaschine zu einer Übergabestelle für einen sich anschließenden Weiterverarbeitungsschritt, wie beispielsweise einem Rauchstockmagazin, eingesetzt, so dass sich nicht nur die Herstellkosten des erfindungsgemäßen Systems sondern auch dessen Steuerungsaufwand und die damit verbundenen Kosten erheblich verringern. Darüber hinaus ermöglicht das erfindungsgemäße System auch eine einfache Anpassung an unterschiedlich zu verarbeitende Wurstprodukte. So können mit dem System gemäß der Erfindung neben Kranzdarmwürsten auch paarweise zusammenhängende Würste usw. verarbeitet werden.

Für den Gliederförderer können, wie bereits vorstehend erwähnt, ganz unterschiedliche Förderelemente, je nach Einsatzanforderung, verwendet werden. Besonders vorteilhaft ist es, wenn das Förderelement des Gliederförderers durch einen Haken gebildet ist, der an dem Zugmittel des Gliederförderers in Förderrichtung des Gliederförderers ortsfest gehalten ist. Der Haken erlaubt ein Haltern der Wurstprodukte an den ggf. vorhandenen Wurstfäden oder anderen Aufhängemitteln in einer vertikalen Ausrichtung der Würste.

Grundsätzlich kann die Übergabe der Wurst an das Förderelement des Gliederförderers dadurch erfolgen, dass die Wurst nach Freigabe von der Wurstclipmaschine in Folge der auf sie einwirkenden Schwerkraft nach unten fällt und von dem Förderelement des Gliederförderers aufgefangen wird. Hierbei tritt jedoch die Schwierigkeit auf, dass das Förderelement des Gliederförderers sehr genau gegenüber der Clipmaschine bzw. der Fallbahn der Wurst positioniert werden muss. Um eine sichere Übergabe der Wurst von der Wurstclipmaschine an das Förderelement des Gliederförderers zu ermöglichen, ist es weiterhin vorteilhaft, wenn das Förderelement des Gliederförderers zumindest im Bereich des Füllrohrs aus einer Förderstellung in eine Übergabestellung reversibel bewegbar ist.

Die Bewegung des Förderelements des Gliederförderers zum reversiblen Erreichen der Übergabestellung kann eine lineare Bewegung, beispielsweise eine Horizontalbewegung sein. Eine platzsparende Lösung für diese Bewegung wird dadurch erreicht, dass das Förderelement des Gliederförderers zumindest im Bereich des Füllrohrs aus einer Förderstellung in eine Übergabestellung reversibel verschwenkbar ist.

Das Förderelement des Gliederförderers weist einen Fangabschnitt auf, der gegenüber der die Mittellängsachse des Förderelements enthaltenen Ebene in Förderrichtung des Gliederförderers hervorsteht. Erstreckt sich beispielsweise der Gliederförderer in einer Horizontalebene und das Förderelement in einer Vertikalebene, so besitzt das Förderelement somit einen Fangabschnitt, der aus der Vertikalebene des Förderelements in Förderrichtung hervorsteht. Damit kann das Förderelement in einen von einem Wurstprodukt gebildeten Kranz bzw. Kreis, der sich in einer Vertikalebene erstreckt, einfahren, ohne dass die Wurst dies behindert. In der Draufsicht aus der Horizontalebene kann dieser Fangabschnitt des Förderelements also zu der Längsachse des Förderelements, die diese Horizontalebene schneidet, einen Abstand aufweisen.

Grundsätzlich ist es möglich, dass der Gliederförderer nur ein Förderelement aufweist. Um eine rentable Produktion zu ermöglichen, ist es aber vorteilhaft, wenn der Gliederförderer mehrere Förderelemente besitzt. Dabei können die Förderelemente des Gliederförderers äquidistant zueinander angeordnet sein. Sofern dies erforderlich ist, können aber die Förderelemente in einem ungleichen Abstand zueinander angeordnet werden.

Für den Gliederförderer können die unterschiedlichsten Ausgestaltungen gewählt werden. So besteht prinzipiell die Möglichkeit, dass der Gliederförderer als hin- und hergehender Förderer ausgestaltet ist. Eine besonders ökonomische Lösung besteht darin, dass der Gliederförderer ein insbesondere umlaufender Stetigförderer ist.

Als Zugmittel für den Gliederförderer können wiederum alle erdenklichen Lösungen verwendet werden. Eine robuste und einfache Befestigung der Förderelemente erlaubende Ausgestaltung für das Zugmittel besteht darin, dass das Zugmittel des Gliederförderers eine Endloszugkette ist.

Der von dem Gliederförderer definierte Förderweg kann wiederum den jeweiligen Gegebenheiten angepasst werden, was ein weiterer Vorteil eines Gliederförderers ist. Eine einfache und leicht zu realisierende Lösung besteht darin, dass das Zugmittel des Gliederförderers einen zumindest annährend in einer Horizontalebene und zumindest annährend die Form eines langgestreckten Ovals aufweisenden Förderweg definiert.

Ein kompakter Aufbau des erfindungsgemäßen Systems kann dadurch erreicht werden, dass der Gliederförderer mit einem Umlenkabschnitt des Förderwegs unmittelbar benachbart zu dem Füllrohr angeordnet ist. Selbstverständlich besteht aber auch die Möglichkeit, dass sich der Gliederförderer mit einem seiner Längsabschnitte an die Wurstclipmaschine anschließt.

Um die Übergabe der Wurst von der Wurstclipmaschine an die Fördereinrichtung sicher zu bewerkstelligen, ist es weiterhin vorteilhaft, wenn zwischen dem Gliederförderer und dem Füllrohr ein Bewegungsraum für das Wurstprodukt vorgesehen ist. Dabei ist es von Vorteil, wenn sich der Bewegungsraum hauptsächlich von dem Füllrohr weg und nach unten erstreckt. Selbstverständlich kann sich hierbei der Bewegungsraum auch nach oben erstrecken, um beispielsweise die Förderelemente aus der Förderstellung in die Übergabestellung reversibel zu ermöglichen. Dieser Bewegungsraum dient auch dazu, dass sich das am Füllrohr ausbildende Wurstprodukt in einer Vertikalebene ausbildet. Handelt es sich bei dem Wurstprodukt beispielsweise um eine Kranzdarmwurst, so erstreckt sich dann der Kranz in dieser Vertikalebene. Hierdurch wird die Übergabe des Wurstprodukts an das Förderelement des Gliederförderers erleichtert.

Wie bereits vorstehend erwähnt, wird an Wurstprodukten häufig ein Faden angebracht, der ein Aufhängen der Wurst ermöglicht. Um dabei die Bildung der Wurstform, beispielsweise einen Kranz, zu ermöglichen bzw. zu unterstützen, ist es weiterhin vorteilhaft, wenn eine Fadenzuführeinrichtung vorgesehen ist, die Mittel zum zumindest vorübergehenden Festhalten des Fadens enthält. Diese vorübergehende Festhalten kann zum Beispiel während der Ausbildung der Wurstform erfolgen. Zum Abnehmen des Wurstprodukts von der Wurstclipmaschine, oder bereits kurz vorher, kann dann der Faden von dem Fadenfesthaltemittel freigegeben und weiterer Faden zugeführt werden. Alternativ zu diesem letzten Schritt ist es möglich, dass bereits vorab das für die Freigabe von der Wurstclipmaschine notwendige Fadenstück von der Fadenzuführeinrichtung zugeführt worden ist, so dass der Faden zusammen mit diesem zusätzlichen Fadenstück festgehalten wird.

Grundsätzlich können für die Wurstclipmaschine und die Wurstfördereinrichtung jeweils eine eigene Steuereinrichtung vorgesehen werden. Dabei kann die Koordination zwischen den beiden Einheiten durch einen aufeinander abgestimmten Arbeitsprozess der beiden Einheiten, der ggf. durch entsprechende Sensoren unterstützt wird, ermöglicht werden. Es besteht aber auch die Möglichkeit, dass eine Steuereinrichtung vorgesehen ist, die den Gliederförderer und zumindest den Füllvorgang der Wurstclipmaschine steuert. Dabei kann die gemeinsame Steuereinrichtung den für die Wurstclipmaschine und die Wurstfördereinrichtung jeweils eigenständig vorgesehenen Steuereinrichtungen übergeordnet sein oder eine einzige Steuereinrichtung für beide Einheiten gemeinsam vorgesehen sein, welche die Abläufe in diesen Einheiten insgesamt oder zumindest teilweise steuert.

Hinsichtlich des Verfahrens wird die vorstehende Aufgabe durch die Merkmale des Anspruchs 6 gelöst. In den sich daran anschließenden Ansprüchen 7 bis 10 finden sich vorteilhafte Ausgestaltungen hierzu.

Gemäß der Erfindung umfasst das Verfahren zum Steuern eines Systems aus einer Wurstclipmaschine und einer Wurstfördereinrichtung, bei dem die Wurstclipmaschine ein Füllrohr aufweist und die motorisch angetriebene Wurstfördereinrichtung wenigstens ein Förderelement enthält und in Vorschubrichtung der Wurst stromabwärts des Füllrohrs der Wurstclipmaschine angeordnet ist, die im Anspruch 6 beanspruchten Schritte.

Grundsätzlich kann die Übergabe der Wurst von der Wurstclipmaschine bereits bei der Herstellung der Wurst in der Weise erfolgen, dass das Förderelement des Gliederförderers in Kontakt mit dem Wurstprodukt gelangt. Um aber den Herstellvorgang der Wurst nicht zu beeinträchtigen, ist es vorteilhaft, wenn das Übergeben des Wurstprodukts an das Förderelement unmittelbar kurz vor oder nach dem Abtrennvorgang erfolgt.

Eine besonders einfach zu realisierende Übergabe wird dadurch erreicht, dass das Übergeben des Wurstprodukts durch Einwirken der Schwerkraft auf das Wurstprodukt erfolgt. Darüber hinaus kann die Schwerkraft auch dazu verwendet werden, dass sich das Wurstprodukt an dem Förderelement des Gliederförderers in die für die Weiterverarbeitung gewünschte Position ausrichtet. Handelt es sich bei dem Wurstprodukt um eine Kranzdarmwurst, so rutscht diese nach der Übernahme durch das Förderelements so lange entlang des Förderelements, bis der die beiden Wurstenden verbindende Fadenabschnitt das Halten der Wurst an dem Förderelement bewirkt.

Üblicherweise wird zur Herstellung einer Kranzdarmwurst ein Tisch verwendet, auf dem sich der Kranz in horizontaler Ausrichtung ausbildet. Um die Formausbildung der Wurst, beispielsweise eines Wurstkranzes zu ermöglichen, kann weiterhin vorgesehen sein, dass ein an dem in Vorschubrichtung vorderen Ende des Wurstprodukts befestigter Faden zumindest während des Füllvorgangs festgehalten wird. Dabei kann die Formausbildung des Wurstprodukts in einer Vertikalebene erfolgen.

Damit eine einfache Übergabe des Wurstprodukts an das Förderelement des Gliederförderers realisiert werden kann und/oder die Ausbildung der Wurstform in einer Vertikalebene möglich ist, kann weiterhin ein Bewegungsraum für das Wurstprodukt vorgesehen werden.

Im übrigen gelten für das erfindungsgemäße Verfahren die gleichen Vorteile und Ausgestaltungen wie sie im Zusammenhang mit dem erfindungsgemäßen System geschildert wurden.

Weitere vorteilhafte Ausgestaltungen sowie ein Ausführungsbeispiel der Erfindung werden nachstehend in Verbindung mit den beigefügten Zeichnungsfiguren erläutert. In diesem Zusammenhang ist darauf hinzuweisen, dass sich die bei der Beschreibung des Ausführungsbeispiels verwendeten Begriffe "links", "rechts", "unten" und "oben" auf die Zeichnungsfiguren in einer Ausrichtung mit normal lesbaren Bezugszeichen und Figurenbezeichnungen beziehen. Hierbei ist:

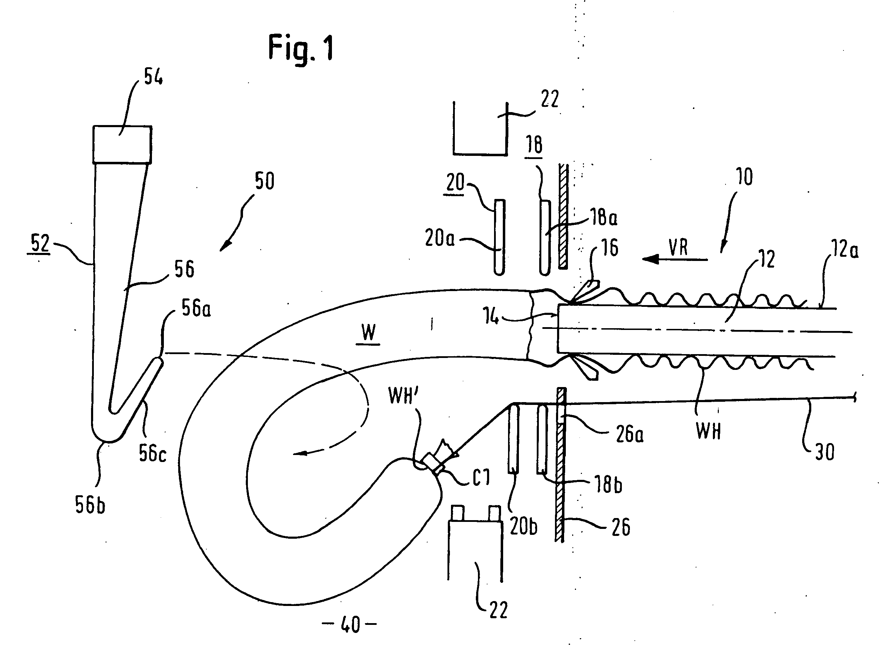

- Fig. 1 bis 6: schematische Ansichten des erfindungsgemäßen Systems bei verschiedenen Ablaufschritten des Verfahrens gemäß der Erfindung.

In den Fig. 1 bis 6, die auch der Erläuterung des erfindungsgemäßen Verfahrens dienen, sind die wesentlichen Bestandteile einer Wurstclipmaschine 10 und einer Wurstfördereinrichtung 50, die das System gemäß der Erfindung ergeben, schematisch wiedergegeben. Hierbei ist zu beachten, dass nur die für das Verständnis des erfindungsgemäßen Systems bzw. Verfahrens notwendigen Bestandteile der jeweiligen Maschine 10 bzw. Einrichtung 50 dargestellt sind. Ebenfalls ist noch anzumerken, dass das erfindungsgemäße System bzw. Verfahren bei der Herstellung einer in den Figuren 1 bis 6 ebenso schematisch wiedergegebenen Kranzdarmwurst W eingesetzt wird. Selbstverständlich lässt sich die Erfindung auch bei anderen Wurstformen, wie zum Beispiel paarweise zusammenhängende Würste, einsetzen.

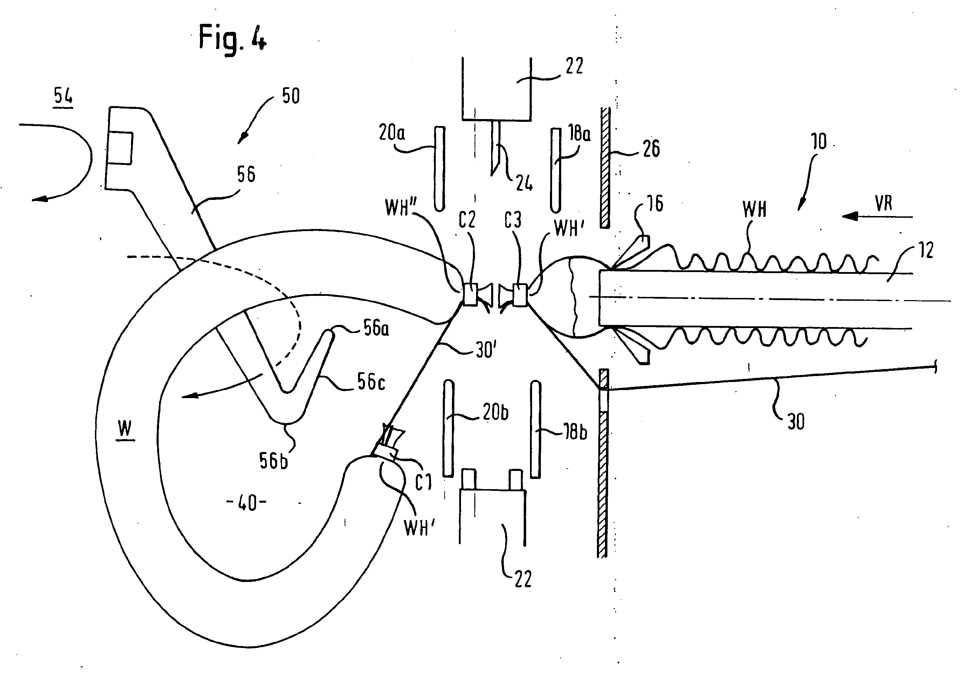

Die wesentlichen Bestandteile der Wurstclipmaschine 10 sind ein Füllrohr 12 mit einer am linken Ende des Füllrohrs 12 angeordneten Mündungsöffnung 14 sowie einer um das Füllrohr 12 herum in der Nähe der Mündungsöffnung 14 vorgesehenen Darmbremse 16. In Vorschubrichtung VR der herzustellenden Kranzdarmwurst W befinden sich vor der Mündungsöffnung 14 ein erstes 18 und ein zweites Verdrängerscherenpaar 20, die jeweils aus einem oberen und einem unteren Verdrängerscherenpaar-Bauteil 18a, 20a bzw.18b, 20b bestehen, eine Clipsetz- und Clipverschließeinrichtung 22, die einen nicht näher bezeichneten Stempel und eine ebenfalls nicht näher bezeichnete Matrize enthalten, sowie ein Trennmesser 24 (vgl. auch Fig. 4).

Auf die Außenfläche 12a des einen zumindest annährend kreisringförmigen Querschnitt aufweisenden Füllrohres 12 ist eine flexible Wursthülle WH aufgezogen, und zwar dergestalt, dass sich ein in Vorschubrichtung VR vorderes verschlossenes Ende WH' der Wursthülle WH vor der Mündungsöffnung 14 befindet, die Wursthülle WH zwischen der Außenfläche 12a des Füllrohres 12 und der Darmbremse 16 hindurchgeführt ist und auf der Außenfläche 12a des Füllrohres 12 in entgegengesetzter Richtung zu der Vorschubrichtung VR hinter der Darmbremse 16 einen Vorrat bildet. Der den Vorrat bildende Abschnitt der Wursthülle WH ist - wie in den Zeichnungen angedeutet - ziehharmonikaartig gestaucht.

Am vorderen verschlossenen Ende WH' der Wursthülle WH ist ein Wurstfaden 30, der im Weitern auch als Faden 30 bezeichnet wird, befestigt. Dieser ist zu Beginn der Herstellung der Kranzdarmwurst W noch mit einem Fadenvorrat auf einer nicht weiter dargestellten Garnrolle verbunden und erstreckt sich von dieser in zumindest annährend horizontaler Richtung. Selbstverständlich kann aber der Fadenweg einen anderen Verlauf aufweisen, sofern er im Bereich der Verdrängerscherenpaare 18, 20 zumindest annährend horizontal verläuft. Weicht der Fadenweg von der Horizontalen ab, kann letzteres durch Anordnung entsprechender Umlenkrollen bewirkt werden. Die Garnrolle ist in einem ebenfalls nicht näher dargestellten, rechts von der Mündungsöffnung 14 des Füllrohrs 12 vorgesehenen Fadenspender drehbar gehalten. Der Fadenspender enthält noch Mittel zum zumindest vorübergehenden Festhalten des Fadens, so dass hierdurch die Formbildung der Wurst unterstützt werden kann.

Der Faden 30 wird in Vorschubrichtung VR von der Garnrolle abgezogen und durch eine Führungsöffnung 26a eines im Bereich der Mündungsöffnung 14 des Füllrohrs 12 angeordneten, im wesentlichen vertikal ausgerichteten Führungsblechs 26 hindurchgeführt. Von der Führungsöffnung 26a läuft der Faden 30 über die beiden unteren Bauteile 18b, 20b der beiden Verdrängerscherenpaare 18, 20 zu dem vorderen Ende WH' der Wursthülle WH und ist dort mittels eines ersten Verschlussclips C1 an diesem Ende WH' mit der zu bildenden Wurst W fest verbunden.

Das Befüllen einer Wurst W beginnt damit, dass Füllgut bzw. Wurstbrät durch das Füllrohr 12 in die Wursthülle WH gepresst wird. Da deren vorderes Ende WH' mit dem ersten Verschlussclip C1 verschlossen ist, füllt sich die Wursthülle WH und zieht gleichzeitig weiteres Hüllenmaterial WH aus dem ziehharmonikartigen, auf dem Füllrohr 12 befindlichen Vorrat ab. Beim Abziehen der Wursthülle WH wird diese von der Darmbremse 16 definiert gebremst, um so den gewünschten Fülldruck in der Wursthülle WH einzustellen. Die vom Fülldruck bewirkte Kraft zum Abziehen der Wursthülle WH aus dem Vorrat sowie die dem entgegenstehende Bremskraft der Darmbremse 16 stehen im Gleichgewicht zueinander.

Durch den am vorderen verschlossenen Ende WH' der Wursthülle WH mit Hilfe des ersten Verschlussclips C1 befestigten Faden 30 wird dieses Wursthüllenende WH' ab einer bestimmten Füllmenge zurückgehalten, so dass die Wursthülle WH von diesem Zeitpunkt an nach unten umgelenkt wird. Bei welchem Füllgrad es zu dieser Umlenkung kommt und wie stark die Wursthülle WH umgelenkt wird, hängt dabei von der Länge des Fadens 30 ab, die von dem Fadenspender freigegeben wurde. Wie in den Fig. 1 bis 4 dargestellt, krümmt sich dabei die entstehende Wurst W in einem zwischen der Wurstclipmaschine 10 und der Wurstfördereinrichtung 50 vorgesehenen Bewegungsraum 40 für die Wurst W nach unten.

Links von dem Bewegungsraum 40 bzw. in Vorschubrichtung VR nach dem Bewegungsraum 40 ist die Wurstfördereinrichtung 50 angeordnet. Die Wurstfördereinrichtung 50 wird durch einen Stetigförderer in Form eines umlaufende Gliederförderers 52 gebildet. Der Gliederförderer 52 weist als Zugmittel eine endlos umlaufende Zugkette 54 auf, die als Bewegungsweg ein in einer Horizontalebene liegendes, langgestrecktes Oval durchläuft. Einer der beiden Umkehr- bzw. Wendeabschnitte dieses langgestreckten ovalen Bewegungswegs, d.h. der rechte Umkehrabschnitt befindet sich in den Fig. 1 bis 6 links von dem Bewegungsraum 40.

Die Förderelemente des Gliederförderers 52 werden durch Haken 56 gebildet, die in einem äquidistanten Abstand an der Endloszugkette 54 in Förderrichtung des Gliederförderers 52 ortsfest gehalten sind. Die Haken 56 hängen dabei von der Endloszugkette 54 nach unten. Die Hakenspitze 56a aller Haken 56 weist dabei nach außen, so dass im Bereich des Bewegungsraums 40 diese Hakenspitze 56a in Richtung der Füllmaschine 10 weist.

Der Haken 56 des Gliederförderers 52 weist weiterhin einen Fangabschnitt 56b auf, der aus der vertikal verlaufenden Hauptebene, in der sich der Haken 56 hauptsächlich erstreckt bzw. in der die nicht weiter dargestellte Mittellängsachse des Hakens 56 verläuft, in Förderrichtung des Gliederförderers 52 hervorsteht. Damit kann der Haken 56 in den von dem Wurstprodukt gebildeten Kranz bzw. Kreis, der sich, wie vorstehend geschildert, ebenfalls in einer Vertikalebene erstreckt, einfahren, ohne dass die Wurst W dies behindert. In der Draufsicht aus der Horizontalebene weist dieser Fangabschnitt 56b des Hakens 56 also zu der diese Horizontalebene schneidenden Längsachse des Hakens 56 einen Abstand auf.

Alternativ oder ergänzend hierzu, kann jeder Haken 56 zumindest im Bereich des Bewegungsraums 40 bzw. im Bereich des Füllrohrs 12 aus seiner in Fig. 1 gezeigten Förder- bzw. Bereitschaftsstellung in Richtung auf das Füllrohr 12 bzw. in den Bewegungsraum 40 hinein in einer Vertikalebene reversibel in eine Übergabestellung verschwenkt werden. Dies kann beispielsweise durch eine geeignet ausgestaltet Kulissenführung oder durch einen motorischen Antrieb für den Haken 56 bewirkt werden. Es ist noch zu bemerken, dass die Haken 56 austauschbar an der Endloszugkette 54 angebracht sein können, so dass je nach Einsatzfall bzw. zu verarbeitender Wurst W unterschiedlich geformte Haken 56 verwendet werden können.

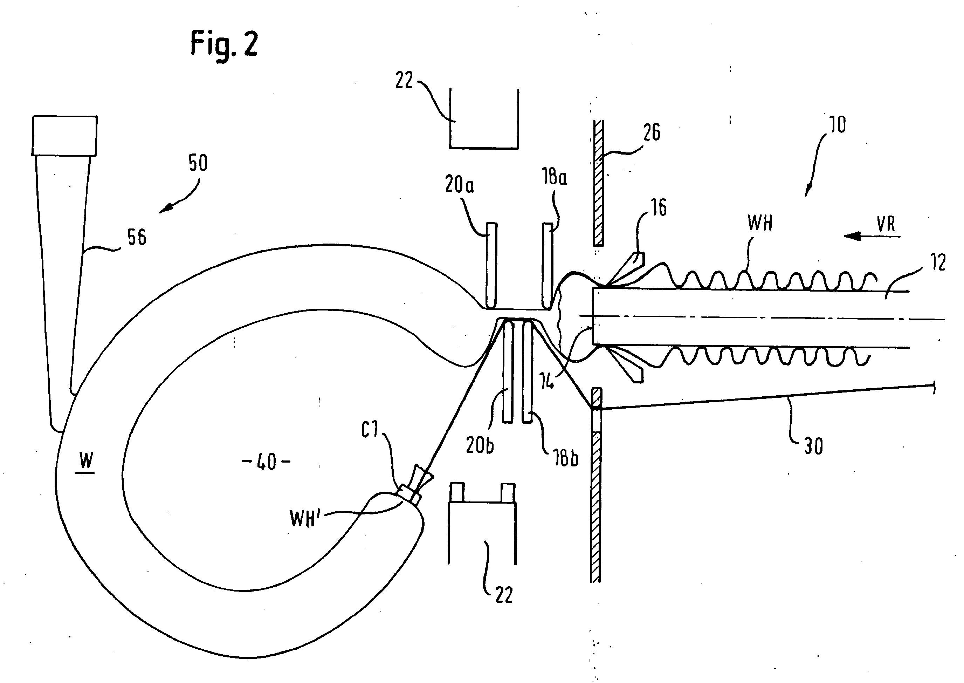

Das erfindungsgemäße System bzw. Verfahren arbeiten wie folgt, wobei zu bemerken ist, dass dieser Ablauf durch eine nicht weiter dargestellte Steuereinrichtung gesteuert wird:
Sobald die Wurst W auf das gewünschte Maß befüllt ist, also der Füllvorgang für diese Wurst W abgeschlossen ist, greifen die beiden Verdrängerscherenpaare 18, 20 zu und schnüren auf diese Weise die Wursthülle WH ab. Die beiden Verdrängerscherenpaare 18, 20 befinden sich zu Beginn des Abschnürens in einer in Fig. 1 gezeigten Ausgangsstellung in der Weise nebeneinander, dass die beiden oberen Verdrängerscherenpaar-Bauteile 18a, 20a einen geringfügigen horizontalen Abstand aufweisen, innerhalb dessen die beiden dicht aneinanderliegenden unteren Verdrängerscherenpaar-Bauteile 18b, 20b angeordnet sind. Die Größe des Abstands ist dabei so gewählt, dass bei dem anschließenden Zusammenfahren der Verdrängerscherenpaar-Bauteile 18a, 18b bzw. 20a, 20b die beiden oberen Verdrängerscherenpaar-Bauteile 18a, 20b jeweils an der Außenseite der unteren Verdängerscherenpaar-Bauteile 18b, 20b anliegen, d.h. an den Seiten der unteren Verdrängerscherenpaar-Bauteile 18b, 20b die voneinander wegweisen. Zum Abschnüren selbst werden jeweils die oberen und unteren Verdrängerscherenpaar-Bauteile 18a, 18b bzw. 20a, 20b der Verdrängerscherenpaare 18, 20 in vertikaler Richtung aufeinander zugefahren. Dabei wird an der Einschnürstelle das Füllgut aus der Wursthülle WH verdrängt. Dieser Zustand ist in Fig. 2 wiedergegeben.

Anschließend werden die beiden Verdrängerscherenpaare 18, 20 in ihrer nach der Vertikalbewegung der Verdrängerscherenpaar-Bauteile 18a, 18b bzw. 20a, 20b erreichten Vertikalposition in horizontaler Richtung gespreizt, in dem das zweite Verdrängerscherenpaar 20 in Vorschubrichtung VR vom ersten Verdrängerscherenpaar 18 wegbewegt wird. Dabei zieht das zweite Verdrängerscherenpaar 20 weiteres Wursthüllenmaterial WH durch das erste Verdrängerscherenpaar 18 hindurch aus dem Vorrat ab. Außerdem kann bei diesem Vorgang von dem Fadenspender eine zweite Fadenlänge freigegeben, so dass das zweite Verdrängerscherenpaar 20 beim Spreizen nicht nur Wursthüllenmaterial WH, sondern auch den Faden 30 durch das erste Verdrängerscherenpaar 18 hindurch nachziehen kann. Alternativ oder ergänzend hierzu kann dieser zweite Fadenabschnitt bereits vorab von dem Fadenspender bzw. der Garnrolle abgezogen worden sein und in geeigneter Weise in Bereitschaft gehalten werden. Der Faden 30 und die Wursthülle WH bewegen sich dabei mit gleicher Geschwindigkeit.

Der in seiner Ausgangsstellung befindliche Haken 56 wird dabei gleichzeitig oder bereits vorab von dem Gliederförderer 52 in eine Bereitschaftsstellung bewegt. Damit befindet er sich in unmittelbarer Nähe neben der Wurst W.

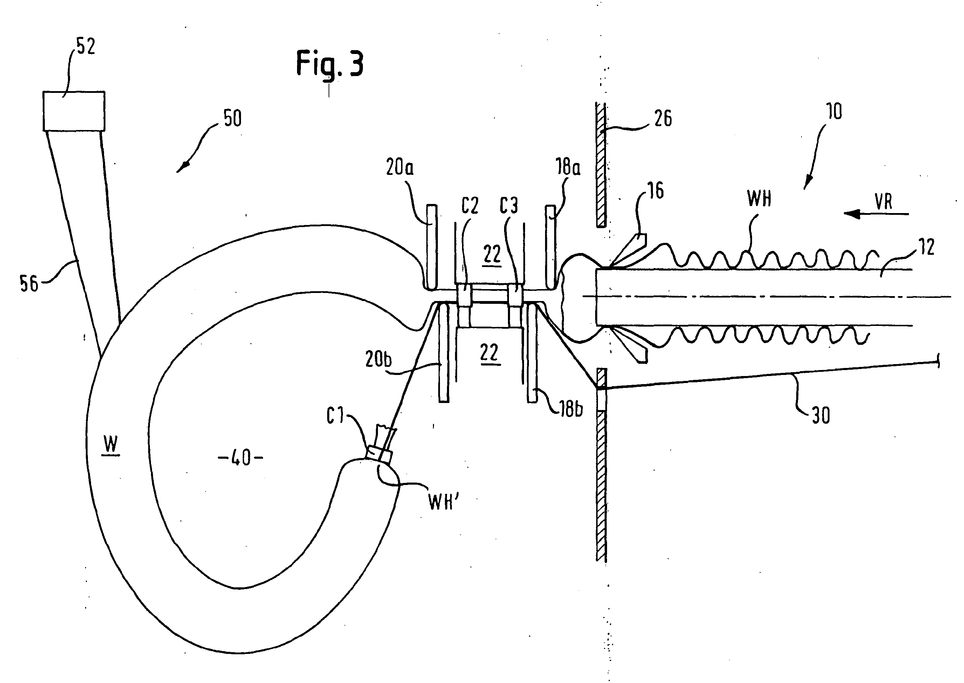

Nach dem Spreizen der Verdrängerscherenpaare 18, 20 wird der zwischen den beiden Verdrängerscherenpaaren 18, 20 befindliche füllgutfreie Hüllenzopf mittels eines zweiten und dritten Verschlussclips C2, C3 verschlossen, wie dies in Fig. 3 gezeigt ist. Dabei wird jeweils auch der Faden 30 von den Verschlussclipsen C2, C3 erfasst und auf diese Weise an der verschlossenen Wursthülle WH befestigt. Hierdurch werden eine zweites bzw. hinteres verschlossenes Ende WH" der entstandenen Wurst W sowie ein erstes bzw. vorderes verschlossenes Ende WH' einer neu herzustellenden Wurst W gebildet. Der Fadenabschnitt 30' der entstandenen Wurst W, der sich zwischen den beiden Verschlussclips C1, C2 erstreckt, bildet zusammen mit den Wurstkranz einen Kreis.

Abschließend werden die Wursthülle WH und der Faden 30 mit Hilfe des Trennmessers 24 zwischen den beiden Verschlussclipsen C2, C3 durchtrennt, so dass der eigentliche Herstellvorgang für die Kranzdarmwurst W abgeschlossen ist. Vor dem Trennvorgang mittels des Trennmessers 24 wird der Haken 56 aus seiner Bereitschaftsstellung in den Bewegungsraum 40 in der Weise hinein bewegt, dass die Hakenspitze 56a und der Fangabschnitt 56b in den von dem Fadenabschnitt 30' und dem Wurstkranz gebildeten Kreis hineinragt (vgl. Fig. 4). Das Hineinragen erfolgt dabei in der Weise, dass die Wurst W möglichst nahe zu dem Füllrohr 12 bzw. den Verdrängerscherenpaare 18, 20 erfasst wird, so dass sie sich bei Übernahme durch den Haken 56 in Folge der auf sie einwirkenden Schwerkraft dreht und der Fadenabschnitt 30' in dem Hakenabschnitt 56c zum liegen kommt, wie es in Fig. 5 und 6 gezeigt ist.

Erfolgt nun das Durchtrennen zwischen den beiden Verschlussclips C2, C3 kann die Wurst W auf dem Fangabschnitt 56b zu dem Hakenabschnitt 56c gleiten und wird dort gehalten.

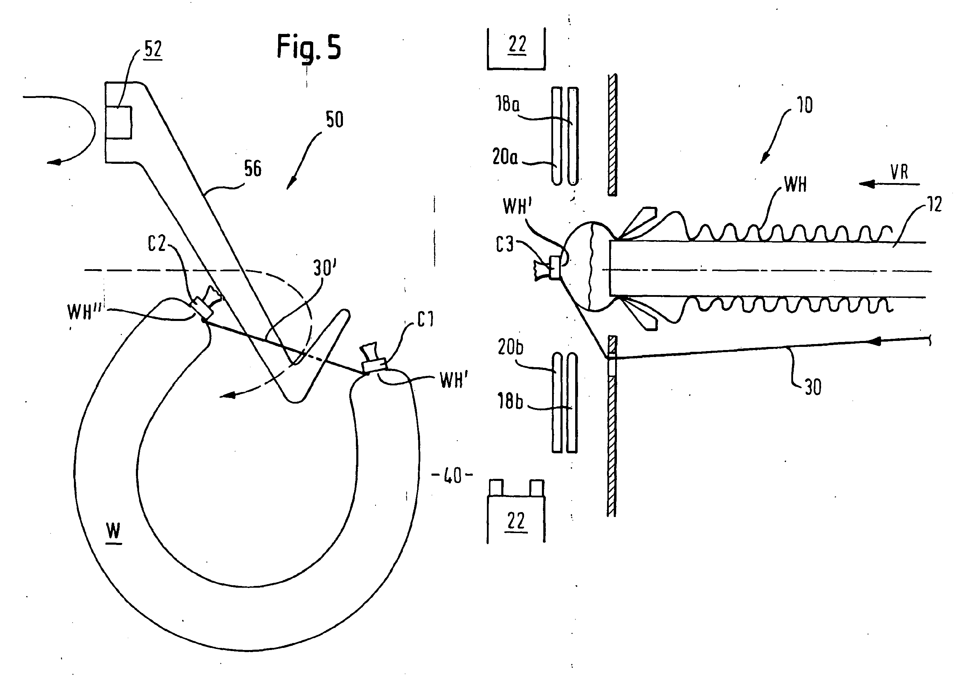

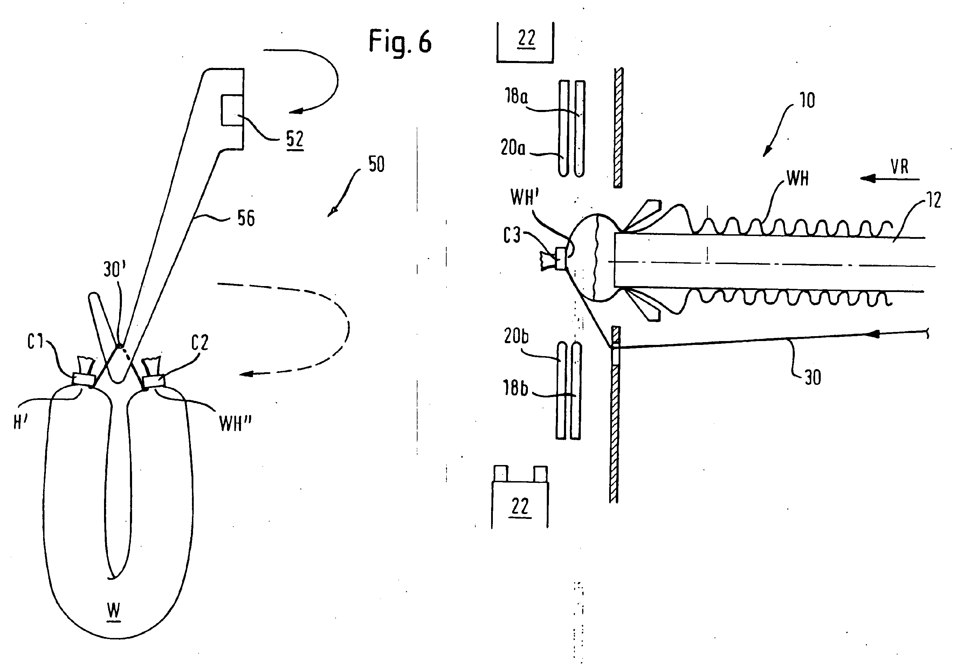

Wie bereits erwähnt, gleitet in Folge der auf die Wurst W einwirkenden Schwerkraft die abgetrennte Wurst W entlang des von ihr gebildeten Kranzes bzw. Kreises an dem Hakenabschnitt 56c entlang, bis der Fadenabschnitt 30' in dem Hakenabschnitt 56c zum Liegen kommt, wie es in Fig. 5 und 6 dargestellt wird. In dieser Position erfolgt der weitere Fördervorgang, wie es in Fig. 6 gezeigt ist. Die an den Haken 56 hängenden Würste W können dann beispielsweise von Hand oder maschinell an nicht weiter dargestellte Rauchstöcke übergeben werden, die in den von dem Kranz der Würste W und den Fadenabschnitten 30' begrenzten Kreis eingefahren werden.

Gleichzeitig oder unmittelbar nach dem Trennvorgang kann der Herstellvorgang für die nächste Wurst W in der vorstehend beschriebenen Weise beginnen. Es ist außerdem noch zu bemerken, dass der Fördervorgang bereits unmittelbar nach dem Einschwenken des Hakens 56 in den Bewegungsraum 40 bzw. in den von dem Kranz der Wurst W und dem Fadenabschnitt 30' gebildeten Kreis fortgesetzt werden kann.

## Patentansprüche

1. System aus einer Wurstclipmaschine (10) und einer Wurstfördereinrichtung (50) zum Herstellen und Fördern von Kranzdarmwürsten (W), bei dem die Wurstclipmaschine (10) ein Füllrohr (12) und ein Trennmesser (24) zum Abtrennen der Wursthülle (WH) einer fertiggestellten Kranzdarmwurst (W) von einem Wursthüllenvorrat aufweist und bei dem die Wurstfördereinrichtung (50) wenigstens ein Förderelement (56) enthält und in Vorschubrichtung (VR) der Kranzdarmwürste (W) stromabwärts des Füllrohrs (12) der Wurstclipmaschine (10) angeordnet ist, wobei an der Wurstclipmaschine (10) eine Fa-denzuführung zum Zuführen und Anbringen eines Fadens (30) zu und an den beiden Enden einer Kranzdarmwurst (W) in der Weise vorgesehen ist, dass die Kranzdarmwurst (W) einen geschlossenen Ring, bestehend aus dem Wurstkranz und einem Abschnitt (30') des Fadens (30), ausbildet,
**dadurch gekennzeichnet, dass** die Wurstfördereinrichtung (50) motorisch angetrieben und durch einen Gliederförderer (52) gebildet und unmittelbar benachbart des Füllrohrs (12) der Wurstclipmaschine (10) angeordnet ist,
und dass das wenigstens eine Förderelement (56) dazu ausgebildet ist, mit einem Fangabschnitt (56b) in den Ring der Kranzdarmwurst (W) vor dem Abtrennen der Wursthülle (WH) der fertiggestellten Kranzdarmwurst (W) von dem Wursthüllenvorrat einzugreifen.

2. System nach Anspruch 1,
**dadurch gekennzeichnet, dass** das Förderelement (56) des Gliederförderers (52) zumindest im Bereich des Füllrohrs (12) aus einer Förderstellung in eine Übergabestellung reversibel bewegbar, insbesondere verschwenkbar ist.

3. System nach Anspruch 1 oder 2,
**dadurch gekennzeichnet, dass** der Fangabschnitt (56b) des Gliederförderers (52) gegenüber der die Mittellängsachse des Förderelements (56) enthaltenen Ebene in Förderrichtung des Gliederförderers (52) hervorsteht.

4. System nach einem der Ansprüche 1 bis 3,
**dadurch gekennzeichnet, dass** zwischen dem Gliederförderer (52) und dem Füllrohr (12) ein Bewegungsraum (40) für das Wurstprodukt (W) vorgesehen ist.

5. System nach einem der Ansprüche 1 bis 4,
**dadurch gekennzeichnet, dass** eine Fadenzuführeinrichtung vorgesehen ist, die Mittel zum zumindest vorübergehenden Festhalten des Fadens (30) enthält.

6. Verfahren zum Steuern eines Systems aus einer Wurstclipmaschine (10) und einer Wurstfördereinrichtung (50), insbesondere eines Systems nach einem der Ansprüche 1 bis 5, zum Herstellen und Fördern von Kranzdarmwürsten (W), wobei die Wurstclipmaschine enthält: ein Füllrohr (12), ein Trennmesser (24) zum Abtrennen der Wursthülle (WH) einer fertiggestellten Kranzdarmwurst (W) von einem Wursthüllenvorrat und eine Fadenzuführeinrichtung zum Zuführen und Anbringen eines Fadens (30) zu und an den beiden Enden einer Kranzdarmwurst (W) in der Weise, dass die Kranzdarmwurst (W) die Form eines Rings, bestehend aus dem Wurstkranz und einem Abschnitt (30') des Fadens (30), ausbildet, wobei die motorisch angetriebene Wurstfördereinrichtung (50) wenigstens ein Förderelement (56) aufweist und in Vorschubrichtung der Kranzdarmwürste (W) stromabwärts des Füllrohrs (12) der Wurstclipmaschine (10) angeordnet ist und wobei das Verfahren die folgenden Schritte umfasst:
- Anordnen des Förderelements (56) der Wurstfördereinrichtung (50), die durch einen Gliederförderer (52) gebildet ist, in einer Bereitschaftsstellung im Bereich des Füllrohrs (12);
- Füllen eines Wurstbräts in ein rohrförmiges, flexibles Verpackungsmaterial (WH) an dem Füllrohr (12) der Füllmaschine (10), Verschließen des Verpackungsmaterials (WH) und Anbringen eines Fadenabschnittes (30') an den beiden Enden der Kranzdarmwurst (W) in der Weise, dass die Kranzdarmwurst (W) einen geschlossenen Ring, bestehend aus dem Wurstkranz und dem Fadenabschnitt (30'), ausbildet, und Abtrennen der so gebildeten Kranzdarmwurst (W) von dem am Füllrohr (12) befindlichen weiteren Verpackungsmaterial;
- Bewegen eines Fangabschnitts (56b) des Förderelements (56) aus der Bereitschaftsstellung in eine Übergabestellung, in der zumindest der Fangabschnitt (56b) des Förderelements (56) in den Ring einer fertiggestellten Kranzdarmwurst (W) eingreift, zumindest vor dem Abtrennen der Wursthülle (WH) der fertiggestellten Kranzdarmwurst (W); und
- Übergeben der Kranzdarmwurst (W) an das Förderelement (56).

7. Verfahren nach Anspruch 6,
**dadurch gekennzeichnet, dass** das Übergeben des Wurstprodukts (W) an das Förderelement (56) nach dem Abtrennvorgang erfolgt.

8. Verfahren nach Anspruch 6 oder 7,
**dadurch gekennzeichnet, dass** das Übergeben des Wurstprodukts (W) durch Einwirken der Schwerkraft auf das Wurstprodukt (W) erfolgt.

9. Verfahren nach einem der Ansprüche 6 bis 8,
**dadurch gekennzeichnet, dass** das Förderelement (56) des Gliederförderers (52) zum Erreichen der Übergabestellung aus der Bereitschaftsstellung reversibel in einer Vertikalebene verschwenkt wird.

10. Verfahren nach einem der Ansprüche 6 bis 9,
**dadurch gekennzeichnet, dass** ein an dem in Vorschubrichtung (VR) vorderen Ende (WH') des Wurstprodukts (W) befestigter Faden (30) zumindest während des Füllvorgangs festgehalten wird.

## Claims

1. A system comprising a sausage clipping machine (10) and a sausage conveyor apparatus (50) for producing and conveying round ring sausages (W), in which the sausage clipping machine (10) has a filling pipe (12) and a severing blade (24) for cutting the sausage casing (WH) of a finished round ring sausage (W) off a sausage casing supply and in which the sausage conveyor apparatus (50) includes at least one conveyor element (56) and is arranged downstream of the filling pipe (12) of the sausage clipping machine (10) in the advance direction (VR) of the round ring sausage (W), wherein provided on the sausage clipping machine (10) is a thread feed device for feeding and fitting a thread (30) to and on the two ends of a round ring sausage (W) in such a way that the round ring sausage (W) forms a closed ring comprising the sausage ring and a portion (30') of the thread (30),
**characterised in that** the sausage conveyor apparatus (50) is motor-driven and formed by a chain link conveyor (52) and arranged immediately adjacent to the filling pipe (12) of the sausage clipping machine (10), and the at least one conveyor element (56) is adapted to engage with a catch portion (56b) into the ring of the round ring sausage (W) before the sausage casing (WH) of the finished round ring sausage (W) is cut off the sausage casing supply.

2. A system according to claim 1,
**characterised in that** the conveyor element (56) of the chain link conveyor (52) is reversibly movable, in particular pivotable, from a conveyor position into a transfer position, at least in the region of the filling pipe (12).

3. A system according to claim 1 or claim 2,
**characterised in that** the catch portion (56b) of the chain link conveyor (52) projects in the conveyor direction of the chain link conveyor (52) with respect to the plane containing the longitudinal center line of the conveyor element (56).

4. A system according to one of claims 1 to 3,
**characterised in that** there is a room for movement (40) for the sausage product (W) between the chain link conveyor (52) and the filling pipe (12).

5. A system according to one of claims 1 to 4,
**characterised in that** there is provided a thread feed device which includes means for at least temporarily holding the thread (30) fast.

6. A method of controlling a system comprising a sausage clipping machine (10) and a sausage conveyor apparatus (50), in particular a system according to one of claims 1 to 5, for producing and conveying round ring sausages (W), wherein the sausage clipping machine includes: a filling pipe (12), a severing blade (24) for cutting the sausage casing (WH) of a finished round ring sausage (W) off a sausage casing supply, and a thread feed device for feeding and fitting a thread (30) to and on the two ends of a round ring sausage (W) in such a way that the round ring sausage (W) forms a ring comprising the sausage ring and a portion (30') of the thread (30), wherein the motor-driven sausage conveyor apparatus (50) includes at least one conveyor element (56) and is arranged downstream of the filling pipe (12) of the sausage clipping machine (10) in the advance direction of the round ring sausages (W) and wherein the method includes the following steps:
- arranging the conveyor element (56) of the sausage conveyor apparatus (50) which is formed by a chain link conveyor (52) in a readiness position in the region of the filling pipe (12);
- filling sausage meat into a tubular flexible packaging material (WH) on the filling pipe (12) of the filling machine (10), closing the packaging material (WH) and fitting a thread portion (30') on the two ends of a round ring sausage (W) in such a way that the round ring sausage (W) forms a closed ring comprising the sausage ring and the thread portion (30') and cutting off the round ring sausage (W) formed in that way from the further packaging material on the filling pipe (12),
- moving a catch portion (56b) of the conveyor element (56) out of the readiness position into a transfer position in which at least the catch portion (56b) of the conveyor element (56) engages into the ring of a finished round ring sausage (W) at least before the sausage casing (WH) of the finished round ring sausage (W) is cut off; and
- transferring the round ring sausage (W) to the conveyor element (56).

7. A method according to claim 6,
**characterised in that** transfer of the sausage product (W) to the conveyor element (56) is effected after the cutting-off operation.

8. A method according to claim 6 or claim 7,
**characterised in that** transfer of the sausage product (W) is effected by the action of the force of gravity on the sausage product (W).

9. A method according to one of claims 6 to 8,
**characterised in that** the conveyor element (56) of the chain link conveyor (52) is reversibly pivoted out of the readiness position in a vertical plane to reach the transfer position.

10. A method according to one of claims 6 to 9,
**characterised in that** a thread (30) fixed to the end (WH') of the sausage product (W), which is the leading end in the advance direction (VR), is held fast at least during the filling operation.

## Revendications

1. Système composé d'une machine (1) d'agrafage de saucisse et d'un dispositif (50) de transport de saucisse pour la production et le transport de saucisses (W) à boyau en couronne, dans lequel la machine (10) d'agrafage de saucisse a un tube (12) d'embossage et un couteau (24) de séparation pour séparer l'enrobage (WH) d'une saucisse (W) à boyau en couronne d'une réserve d'enrobages de saucisse et dans lequel le dispositif (50) de transport de saucisse comporte au moins un élément (56) de convoyeur et est disposé, dans le sens (VR) d'avance des saucisses (W) à boyau en couronne, en aval du tube (12) d'embossage de la machine (10) d'agrafage de saucisse, dans lequel, sur la machine (10) d'agrafage de saucisse, est prévue une amenée de fil pour amener et mettre un fil (30) sur les deux extrémités d'une saucisse (W) à boyau en couronne, de façon à ce que la saucisse (W) à boyau en couronne forme un anneau fermé constitué de la couronne de saucisse et d'un tronçon (30') du fil (30),
**caractérisé en ce que** le dispositif (50) de transport de saucisse est entraîné par moteur et est formé d'un convoyeur (52) à maillons et est disposé au voisinage immédiat du tube (12) d'embossage de la machine (10) d'agrafage de saucisse et **en ce que** le au moins un élément (56) de convoyeur est constitué pour pénétrer par un tronçon (56b) de capture dans l'anneau de la saucisse (W) à boyau en couronne avant la séparation de l'enrobage (WH) de la saucisse (W) à boyau en couronne finie de la réserve d'enrobages de saucisse.

2. Système suivant la revendication 1,
**caractérisé en ce que** l'élément (56) de convoyeur (52) à maillons est mobile réversiblement en pouvant, notamment, pivoter, au moins dans la zone du tube (12) d'embossage, pour passer d'une position de convoyage en une position de transfert.

3. Système suivant la revendication 1 ou 2,
**caractérisé en ce que** le tronçon (56b) de capture du convoyeur (52) à maillons est en saillie, dans le sens de convoyage du convoyeur (52) à maillons, par rapport au plan contenant l'axe longitudinal médian de l'élément (56) de convoyeur.

4. Système suivant l'une des revendications 1 à 3,
**caractérisé en ce qu'**il est prévu un espace (40) de déplacement du produit (W) de saucisse entre le convoyeur (52) à maillons et le tube (12) d'embossage.

5. Système suivant l'une des revendications 1 à 4,
**caractérisé en ce qu'**il est prévu un dispositif d'amenée de fil, qui comporte des moyens pour maintenir solidement, au moins temporairement, le fil (30).

6. Procédé de commande d'un système composé d'une machine (10) d'agrafage de saucisse et d'un dispositif (50) de transport de saucisses, notamment d'un système suivant l'une des revendications 1 à 5, pour la production et le transport de saucisses (W) à boyau en couronne, dans lequel la machine d'agrafage de saucisse comporte : un tube (12) d'embossage, un couteau (24) de séparation pour séparer l'enrobage (WH) d'une saucisse (W) à boyau en couronne finie d'une réserve d'enrobages de saucisse et un dispositif d'amenée de fil pour amener et mettre un fil (30) sur les deux extrémités d'une saucisse (W) à boyau en couronne, de façon à ce que la saucisse (W) à boyau en couronne donne la forme d'un anneau constitué de la couronne de saucisse et d'un tronçon (30') du fil (30), le dispositif (50) de transport de saucisse entraîné par moteur ayant au moins un élément (56) de convoyeur et étant disposé, dans le sens d'avance des saucisses (W) à boyau en couronne, en aval du tube (12) d'embossage de la machine (10) d'agrafage de saucisse et dans lequel le procédé comprend les stades suivants :
- on met l'élément (56) de convoyeur du dispositif (50) de transport de saucisse, qui est formé d'un convoyeur (52) à maillons, en une position de réserve dans la zone du tube (12) d'embossage ;
- on remplit de chair à saucisse un matériau (WH) d'emballage souple et tubulaire sur le tube (12) d'embossage de la machine (10) d'embossage, on ferme le matériau (WH) d'emballage et on met un tronçon (30') de fil aux deux extrémités de la saucisse (W) à boyau en couronne, de façon à ce que la saucisse (W) à boyau en couronne forme un anneau fermé constitué de la couronne de saucisse et du tronçon (30') de fil et on sépare la saucisse (W) à boyau en couronne ainsi formée du matériau d'emballage supplémentaire se trouvant sur le tube (12) d'embossage ;
- on fait passer un tronçon (56b) de capture de l'élément (56) du convoyeur de la position de réserve à une position de transfert, dans laquelle au moins le tronçon (56b) de capture de l'élément (56) de convoyeur pénètre dans l'anneau d'une saucisse (W) à boyau en couronne finie, au moins avant la séparation de l'enrobage (WH) de la saucisse (W) à boyau en couronne finie ; et
- on transfère la saucisse (W) à boyau en couronne sur l'élément (56) de convoyeur.

7. Procédé suivant la revendication 6,
**caractérisé en ce qu'**on effectue le transfert du produit (W) de saucisse sur l'élément (56) de convoyeur après l'opération de séparation.

8. Procédé suivant la revendication 6 ou 7,
**caractérisé en ce qu'**on effectue le transfert du produit (W) de saucisse par action de la force de gravité sur le produit (W) de saucisse.

9. Procédé suivant l'une des revendications 6 à 8,
**caractérisé en ce que** l'élément (56) du convoyeur (52) à maillons pivote dans un plan vertical réversiblement pour atteindre la position de transfert à partir de la position de réserve.

10. Procédé suivant l'une des revendications 6 à 9,
**caractérisé en ce qu'**un fil (30) fixé à l'extrémité (WH') avant, dans le sens (VR) d'avance du produit (W) de saucisse, est fixé au moins pendant l'opération de remplissage.
